# EUROPEAN PATENT SPECIFICATION

(11) **EP 4 125 023 B1**
(45) Date of publication and mention of the grant of the patent: **28.01.2026**
(21) Application number: 22186221.2
(22) Date of filing: 21.07.2022
(51) Int. Cl.: G06Q 30/02, G06V 40/20, G06V 20/52, G06V 40/10

(54) **CUSTOMER SERVICE DETECTION PROGRAM, CUSTOMER SERVICE DETECTION METHOD, AND INFORMATION PROCESSING DEVICE**
KUNDENDIENSTERKENNUNGSPROGRAMM, KUNDENDIENSTERKENNUNGSVERFAHREN UND INFORMATIONSVERARBEITUNGSVORRICHTUNG
PROGRAMME DE DÉTECTION DE SERVICE CLIENT, PROCÉDÉ DE DÉTECTION DE SERVICE CLIENT, ET DISPOSITIF DE TRAITEMENT D'INFORMATIONS

(30) Priority: 30.07.2021 JP 2021126300
(43) Date of publication of application: 01.02.2023
(73) Proprietor: FUJITSU LIMITED, Kawasaki-shi, Kanagawa 211-8588 (JP)
(72) Inventor: JO, Yuka, Kawasaki-shi, Kanagawa 211-8588 (JP)
(74) Representative: Hoffmann Eitle

(56) References cited:
- CN-A- 110 728 209
- CN-A- 111 242 714
- CN-A- 112 070 027
- US-A1- 2016 203 499
- KOOHZADI MARYAM ET AL: "Survey on deep learning methods in human action recognition", IET COMPUTER VISION, THE INSTITUTION OF ENGINEERING AND TECHNOLOGY, MICHAEL FARADAY HOUSE, SIX HILLS WAY, STEVENAGE, HERTS. SG1 2AY, UK, vol. 11, no. 8, 1 December 2017 (2017-12-01), pages 623 - 632, XP006064362, ISSN: 1751-9632, DOI: 10.1049/IET-CVI.2016.0355

## Description

### FIELD

The embodiments discussed herein are related to a customer service detection program, a customer service detection method, and an information processing device.

### BACKGROUND

There are known technical methods for detecting a person's action that represents great interest in a product. For example, there are known technologies, such as a technology that determines whether a customer is picking up a product by hand and looking at the product and especially at the label of the product, a technology that determines from the video the position where a customer's hand has reached on the shelf, and a technology that estimates a customer's posture and identifies movements of stretching a hand for a product, putting the product in a cart, and so forth.

Patent LITERATURE 1: Japanese Laid-open Patent Publication No. 2009-48430

In the case of the technologies described above, however, specific actions are detected in accordance with rules created in advance. Therefore, it is difficult to perform the action detection with high accuracy that covers every product in sales floors, and thus it is difficult to find customers highly effective in customer service.

Specifically, depending on the type of product, a person's action that represents interest in the product varies, so it is preferable to create a rule for each product, but it is difficult to do so in reality because the number of products is huge. For example, when the product is a bicycle, a rule is assumed to detect the action of riding the bicycle, the action of grabbing a handlebar of the bicycle, or the like. Alternatively, when the product is a sofa, a rule is assumed to detect sitting or the like on the sofa. Further, when the product is a cosmetic product, another rule needs to be created.

Accordingly, it is an object in one aspect of an embodiment of the invention to provide a customer service detection program, a customer service detection method, and an information processing device, which make it possible to detect a customer highly effective in customer service.

Further, CN 111 242 714 A relates to the field of computer vision technology, and in particular to product recommendation methods and devices.

Additionally, US 2016/203499 Al relates to a customer behavior analysis system includes an image information acquisition unit that acquires input image information on an image taken of a presentation area where a product is presented to a customer, an action detection unit that detects whether the customer is holding the product and looking at an identification display of the product based on the input image information, and a customer behavior analysis information generation unit that generates customer behavior analysis information containing a relationship between a result of the detection and a purchase result of the product by the customer.

### SUMMARY

The present invention is defined by the independent claims. Preferred embodiments are defined by the dependent claims. Further aspects are provided for facilitating the understanding of the invention.

### BRIEF DESCRIPTION OF DRAWINGS

FIG. 1 is a diagram for explaining an example of the overall configuration of a system according to a first embodiment;
FIG. 2 is a functional block diagram illustrating the functional configuration of an information processing device according to the first embodiment;
FIG. 3 is a diagram illustrating an example of the information stored in a product DB;
FIG. 4 is a diagram illustrating an example of the information stored in an action DB;
FIG. 5 is a diagram illustrating an example of the information stored in a training data DB;
FIG. 6 is a diagram for explaining the overall configuration of the processing during preliminary training;
FIG. 7 is a diagram for explaining an example of skeletal information;
FIG. 8 is a diagram for explaining an example of characteristic action recognition;
FIG. 9 is a diagram for explaining the generation of a determination index;
FIG. 10 is a diagram for explaining the overall configuration of the processing during operation;
FIG. 11 is a diagram for explaining the customer service determination;
FIG. 12 is a flowchart illustrating the flow of training processing according to the first embodiment;
FIG. 13 is a flowchart illustrating the flow of operational processing according to the first embodiment;
FIG. 14 is a diagram for explaining a specific example 1 that uses a mechanical learning model;
FIG. 15 is a diagram for explaining a specific example 2 that uses a mechanical learning model; and
FIG. 16 is a diagram for explaining an example of a hardware configuration.

### DESCRIPTION OF EMBODIMENTS

Preferred embodiments will be explained with reference to accompanying drawings. The present invention is not limited to the following embodiments, the scope of the invention is defined by the claims.

### [a] First Embodiment

### Overall Configuration

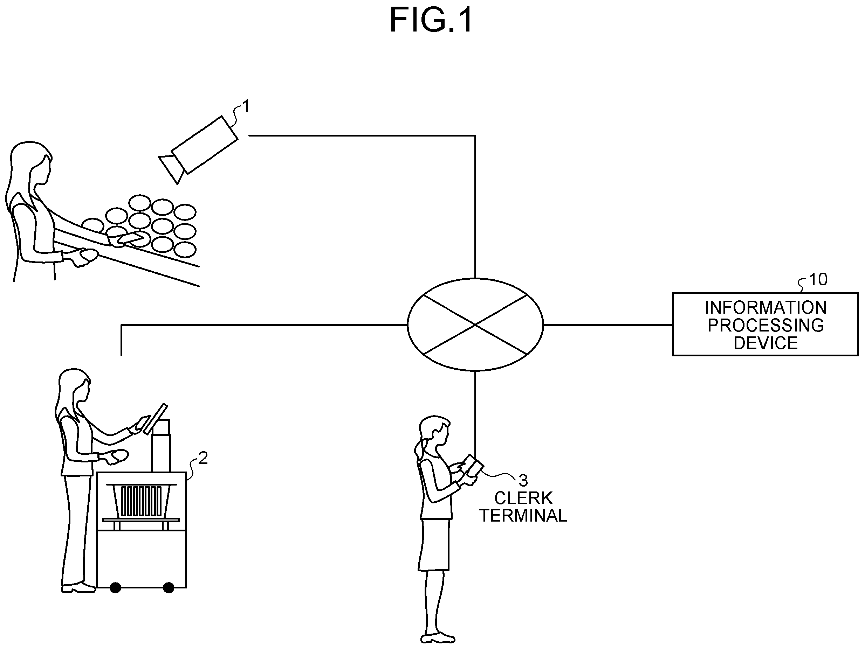

FIG. 1 is a diagram for explaining an example of the overall configuration of a system according to a first embodiment. As illustrated in FIG. 1, in this system, cameras 1 installed in respective sales floors, a Point Of Sales (POS) device 2 for managing product sales, clerk terminals 3 used by clerks, and an information processing device 10 are connected to each other through various networks regardless of whether the networks are wired or wireless.

Each camera 1 is an example of an image pickup device installed in each sales floor, the installation location of the POS device 2 at the cash register counter, or the like. Each camera 1 captures moving image data, which includes image data, moving picture data, video data, or the like, of a customer looking at a product, a customer purchasing a product, or the like, and transmits the data to the information processing device 10. The POS device 2 holds the purchase history of each product, and periodically transmits the purchase history to the information processing device 10.
Each clerk terminal 3 is an example of a mobile terminal that exchanges various data with the information processing device 10, and is a terminal owned by a person in charge of customer service.

In a system like this, the information processing device 10 identifies a person, who is highly effective in customer service, in the existing sales floor video in association with the moving image data of purchasers and the POS data, and gives notice about this person to the clerk terminals 3. Specifically, the information processing device 10 obtains the skeletal information of each of the users who acted on a product, and generates feature quantities that characterize the actions of each of the users on the basis of the skeletal information of the users. Then, the information processing device 10 uses the feature quantities of each of the users to generate a determination index for determining a user interested in the product. After that, the information processing device 10 uses the determination index to detect a customer service target from visiting users.

That is, as preliminary processing, the information processing device 10 uses the moving image data or the like actually collected to generate a determination index for determining a customer service target. After that, as operational processing, the information processing device 10 uses the current moving image data or the like and the determination index to execute the detection of a customer service target.

As described above, the information processing device 10 does not perform object learning, Region Of Interest (ROI) setting, or detailed definition of detection target actions, which is costly for each sales floor. However, the information processing device 10 makes it possible to detect a customer highly effective in customer service, by detecting a person interested in a product.

### Functional Configuration

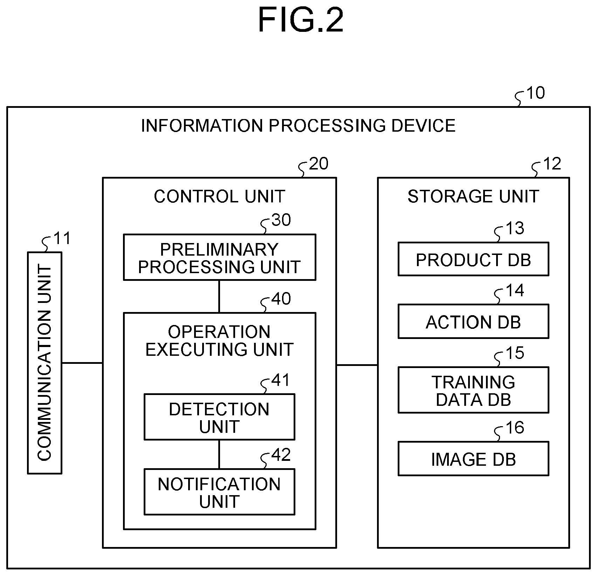

FIG. 2 is a functional block diagram illustrating the functional configuration of the information processing device 10 according to the first embodiment. As illustrated in FIG. 2, the information processing device 10 includes a communication unit 11, a storage unit 12, and a control unit 20.

The communication unit 11 is a processing unit that controls communication with other devices, and is implemented by, for example, a communication interface. For example, the communication unit 11 receives moving image data or the like from each camera 1, receives POS data from the POS device 2, and transmits various data to the clerk terminals 3.

The storage unit 12 is an example of a storage device that stores various data and various programs to be executed by the control unit 20, and is implemented by, for example, a memory or hard disk. This storage unit 12 stores a product DB 13, an action DB 14, a training data DB 15, and an image DB 16.

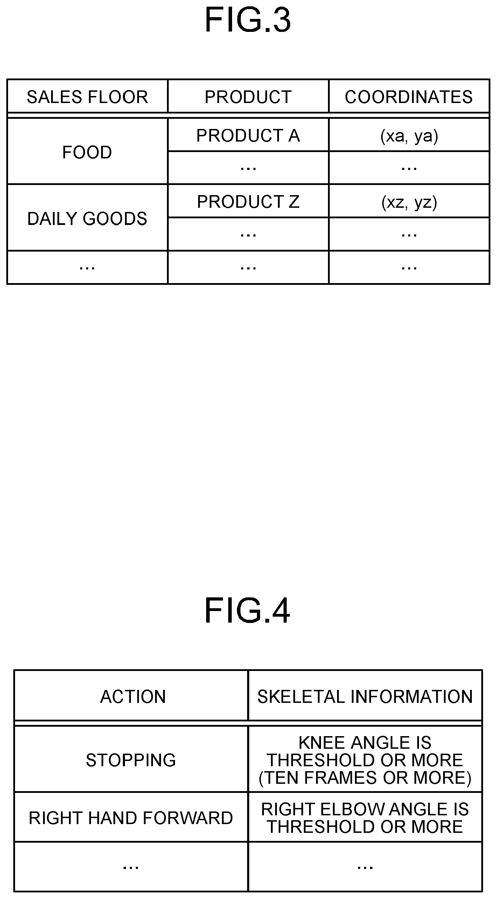

The product DB 13 is a database that stores data related to products that are placed as sales targets in the store. FIG. 3 is a diagram illustrating an example of the information stored in the product DB 13. As illustrated in FIG. 3, the product DB 13 stores "SALES FLOOR, PRODUCT, and COORDINATES" in correlation with each other. The "SALES FLOOR" is set with information that identifies each sales floor, the "PRODUCT" is set with information that identifies each product, and the "COORDINATES" is set with the position of each product in the imaging area of each camera 1. In the example of FIG. 3, it is illustrated that a product A in the food sales floor is located at "xa, ya" in the imaging area of the camera 1.

The action DB 14 is a database that stores data on the correlation between actions and skeletal information, which provides an index indicating what kind of skeletal information is identified as what kind of action. FIG. 4 is a diagram illustrating an example of the information stored in the action DB 14. As illustrated in FIG. 4, the action DB 14 stores "ACTION and SKELETAL INFORMATION" in correlation with each other. The "ACTION" is set with each target action to be identified, and the "SKELETAL INFORMATION" is set with skeletal information to identify each action. In the example of FIG. 4, it is illustrated that, when the skeletal information of "KNEE ANGLE IS THRESHOLD OR MORE" is continuously detected for 10 frames or more, this is identified as the action of "STOPPING". In addition to the "STOPPING", the "ACTION" includes information that can be set arbitrarily, such as "WALKING", "RIGHT HAND FORWARD" that indicates putting the right hand forward, and "POSITION RIGHT" that indicates standing on the right side of the product. The correlation between these actions and the skeletal information can be generated by performing analysis or the like of the past history in advance.

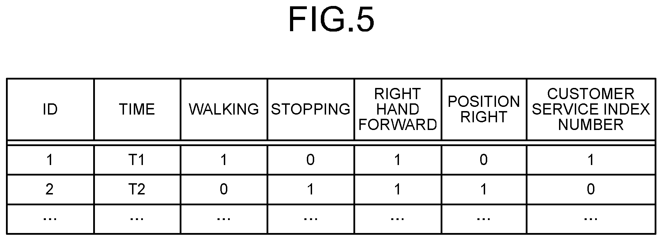

The training data DB 15 is a database that stores training data used for training of a determination index for determining a user interested in a product. FIG. 5 is a diagram illustrating an example of the information stored in the training data DB 15. As illustrated in FIG. 5, the training data stored in the training data DB 15 includes "ID, TIME, WALKING, STOPPING, RIGHT HAND FORWARD, POSITION RIGHT, and CUSTOMER SERVICE INDEX NUMBER". Here, the "WALKING, STOPPING, RIGHT HAND FORWARD, and POSITION RIGHT" are set to "1" when being applicable, and are set to "0" when being not applicable. The "CUSTOMER SERVICE INDEX NUMBER" is set to "1" when the corresponding user purchased the product, and is set to "0" when the corresponding user did not purchase the product.

In other words, the user with ID = 1 is indicated that the user purchased the product after performing each the actions of "WALKING" and putting the "RIGHT HAND FORWARD" in front of the product. The information processing device 10 identifies the user (customer) by face recognition or the like from the moving image data captured by the camera 1, and follows up the user by the cameras in the store. Then, the information processing device 10 can identify the target product that brought about the actions, by the coordinates in the sales floor A. Further, the information processing device 10 can generate training data by identifying whether the user has purchased the product by use of the camera 1 that captures the cash register.

Here, the "WALKING, STOPPING, RIGHT HAND FORWARD, and POSITION RIGHT" are feature quantities. The "CUSTOMER SERVICE INDEX NUMBER" is correct answer information, and is an example of a customer service index number that indicates the degree of user's interest in the product.

The control unit 20 is a processing unit that controls the entire information processing device 10, and is implemented by, for example, a processor or the like. The control unit 20 includes a preliminary processing unit 30 and an operation executing unit 40.

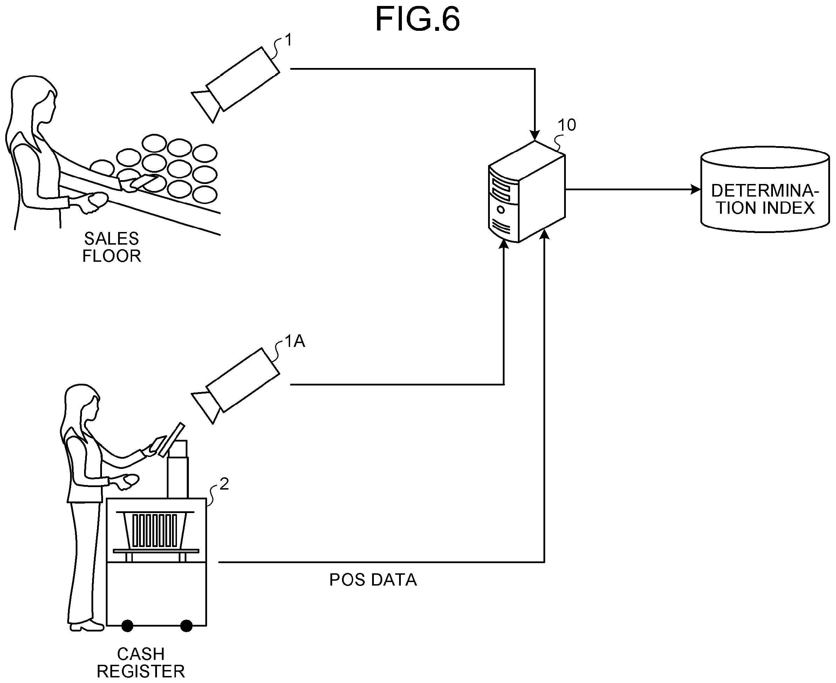

The preliminary processing unit 30 is a processing unit that executes, before the operation, preliminary training to generate a determination index used for determining a customer highly effective in customer service. FIG. 6 is a diagram for explaining the overall configuration of the processing during the preliminary training. As illustrated in FIG. 6, the information processing device 10 can identify users by obtaining image data captured by a camera 1 in a certain sales floor, identify products and coordinates corresponding to this certain sales floor from the product DB 13, and further identify the target product on which a user acted. After that, the information processing device 10 identifies the user from the image data captured by the camera 1A of the cash register (POS device 2), and obtains the POS data of the product purchased by the user. Then, the information processing device 10 generates the determination index by associating the image data captured in the sales floor with the image data captured at the cash register.

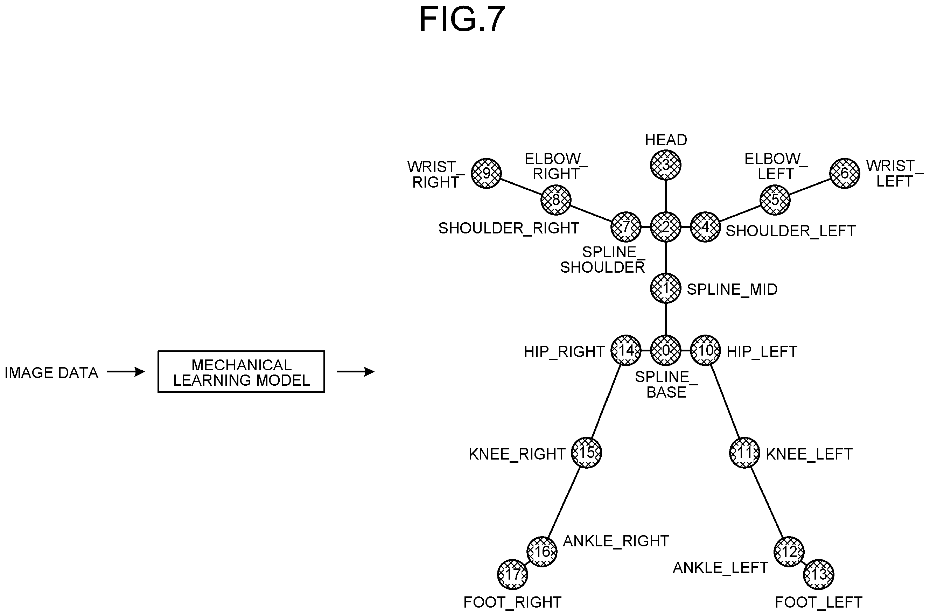

Specifically, the preliminary processing unit 30 obtains the skeletal information of each of the users who acted on the product. For example, the preliminary processing unit 30 obtains the skeletal information of each user from image data captured by cameras, by use of a mechanical learning model or image analysis. FIG. 7 is a diagram for explaining an example of the skeletal information. As illustrated in FIG. 7, the preliminary processing unit 30 obtains the skeletal information by inputting image data (each frame) into the trained mechanical learning model.

For the skeletal information, it is possible to use 18 pieces of definition information (the number 0 to the number 17), in which numbers are applied to the respective joints identified by a known skeletal model. For example, the right shoulder joint (SHOULDER_RIGHT) is assigned the number 7, the left elbow joint (ELBOW_LEFT) is assigned the number 5, the left knee joint (KNEE_LEFT) is assigned the number 11, and the right hip joint (HIP_RIGHT) is assigned the number 14. Therefore, the preliminary processing unit 30 can obtain 18 pieces of skeletal coordinate information illustrated in FIG. 7, from the image data. For example, the preliminary processing unit 30 obtains "the X-coordinate = X7, the Y-coordinate = Y7, and the Z-coordinate = Z7" as the position of the right shoulder joint of the number 7. Here, for example, it may be defined that the Z-axis is in the distance direction from the image pickup device to the target, the Y-axis is in the height direction perpendicular to the Z-axis, and the X-axis is in the horizontal direction.

Then, the preliminary processing unit 30 generates feature quantities that characterize the actions of each user on the basis of the skeletal information of the user. For example, the preliminary processing unit 30 refers to the information stored in the action DB illustrated in FIG. 4 to identify the action corresponding to each piece of the obtained skeletal information. Further, the preliminary processing unit 30 uses the identified result to generate training data, and stores the training data in the training data DB 15.

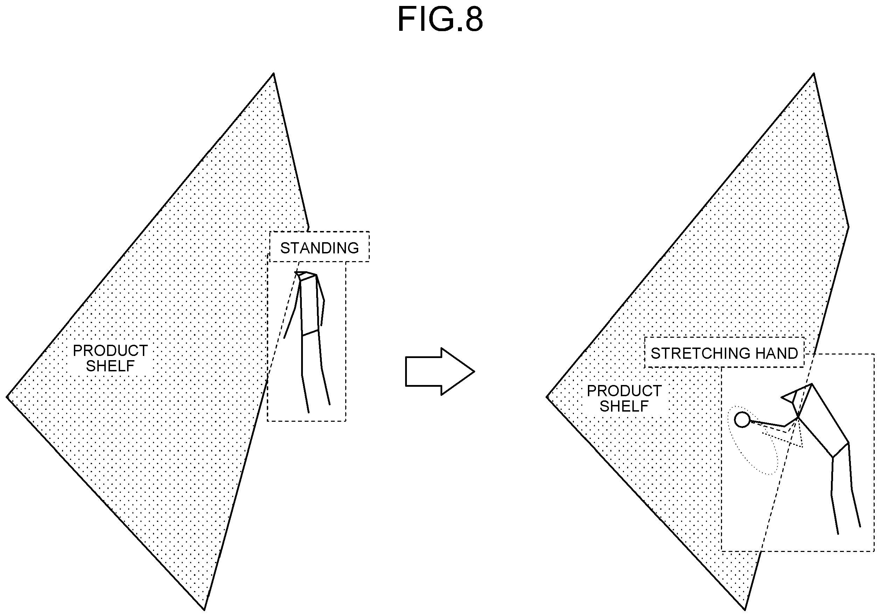

FIG. 8 is a diagram for explaining an example of characteristic action recognition. As illustrated in FIG. 8, when the state of "the knee angle is greater than or equal to a threshold" is continuously detected over predetermined frames in front of the product shelf, and then a frame of "the angle of one of the elbows is greater than or equal to a threshold" is detected, the preliminary processing unit 30 identifies a series of actions of from the action of "stopping" to the action of "stretching a hand". The preliminary processing unit 30 generates feature quantities of "WALKING = 0, STOPPING = 1, RIGHT HAND FORWARD = 1, and POSITION RIGHT = 0" in correlation with the time identified here.

Further, when identifying from the POS data that this user purchased the product, the preliminary processing unit 30 generates training data that correlates the feature quantities of "WALKING = 0, STOPPING = 1, RIGHT HAND FORWARD = 1, and POSITION RIGHT = 0" with "CUSTOMER SERVICE INDEX NUMBER = 1".

After that, the preliminary processing unit 30 uses the feature quantities of each of the users to generate a determination index for determining a user interested in the product. The preliminary processing unit 30 stores the determination index in the storage unit 12 and outputs the determination index to the operation executing unit 40. For example, the preliminary processing unit 30 uses the feature quantities to perform clustering for each of the users, and calculates the average value of the customer service index numbers of the respective users belonging to each of the clusters generated by the clustering. Then, the preliminary processing unit 30 generates, as the determination index, a specific cluster in which the average value of the customer service index numbers is greater than or equal to a threshold.

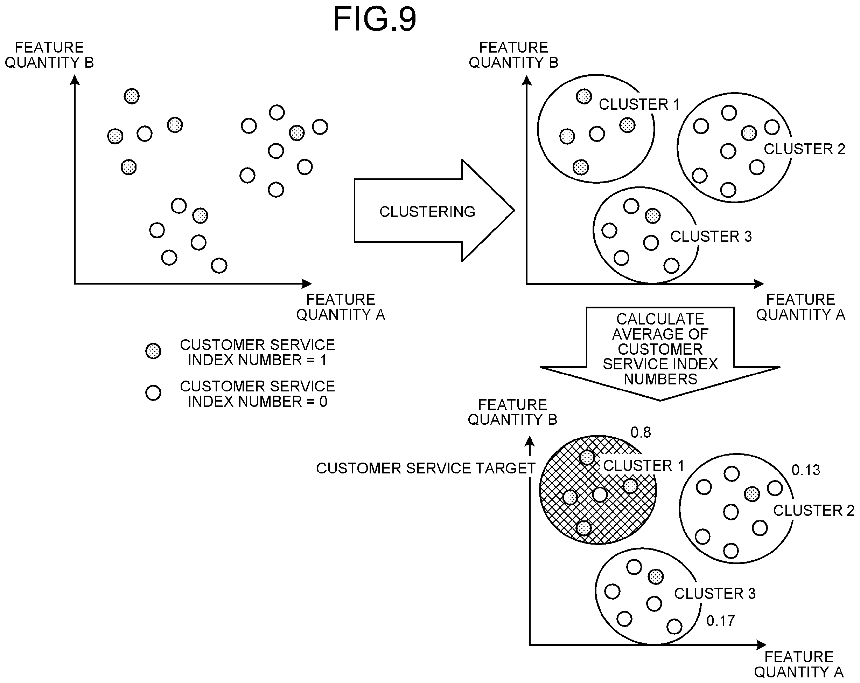

FIG. 9 is a diagram for explaining the generation of the determination index. Here, an explanation will be given of a two-dimensional feature space that uses two feature quantities as an example. Here, for example, each of the feature quantities corresponds to a feature quantity, such as walking, stopping, right hand forward, or position right. The customer service index number is a value indicating the presence or absence of product purchase, for example.

As illustrated in FIG. 9, the preliminary processing unit 30 performs mapping for each piece of the training data on the feature space, which is formed two-dimensional by a feature quantity A and a feature quantity B, while using the feature quantities of each piece of the training data as feature vectors (vector data). Then, the preliminary processing unit 30 performs clustering for each piece of the training data on the feature space, and thereby generates a cluster 1, a cluster 2, and a cluster 3. After that, the preliminary processing unit 30 generates an average value "0.8" of the values of the customer service index numbers in the training data belonging to the cluster 1, an average value "0.13" of the values of the customer service index numbers in the training data belonging to the cluster 2, and an average value "0.17" of the values of the customer service index numbers in the training data belonging to the cluster 3.

Then, the preliminary processing unit 30 determines the cluster 1 in which the average value is greater than or equal to a threshold (such as 0.5) as the determination index. Here, when there is no cluster in which the average value is greater than or equal to threshold, the preliminary processing unit 30 may execute the processing again by increasing the training data.

Returning to FIG. 2, the operation executing unit 40 includes a detection unit 41 and a notification unit 42, and executes the detection of a customer highly effective in customer service by use of the determination index generated by the preliminary processing unit 30.

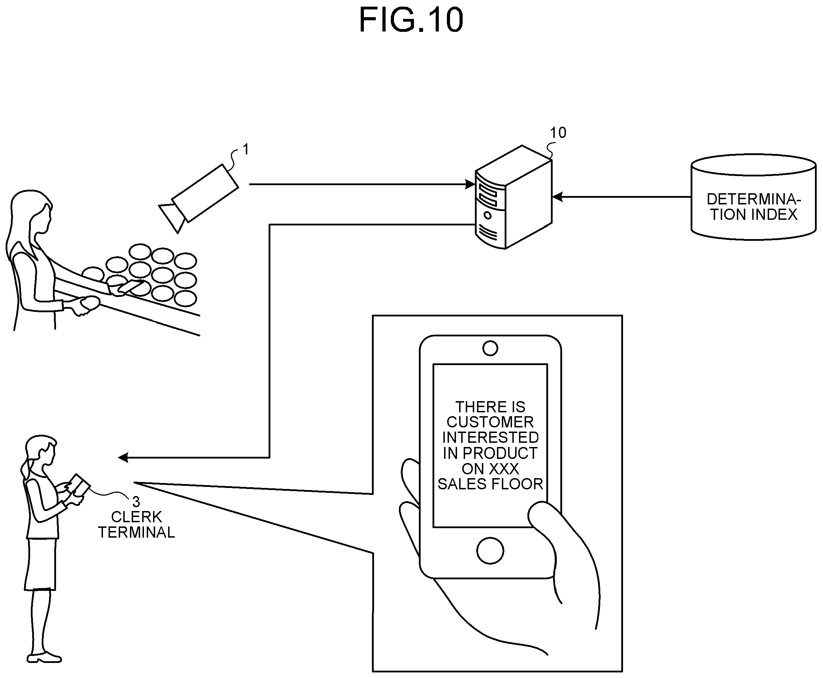

FIG. 10 is a diagram for explaining the overall configuration of the processing during the operation. As illustrated in FIG. 10, the information processing device 10 obtains image data captured by a camera 1 on a certain sales floor, and obtains the skeletal information of a user. After that, the information processing device 10 determines whether the feature quantities based on the skeletal information belong to the cluster 1 described above. When the feature quantities belong to the cluster 1, the information processing device 10 transmits a message, such as "THERE IS CUSTOMER INTERESTED IN PRODUCT ON XXX SALES FLOOR", to the clerk terminals 3. In this way, the information processing device 10 can found a customer highly effective in customer service from among the visiting customers, so that some clerk can advise the customer about the product, for example.

The detection unit 41 is a processing unit that obtains the skeletal information of visiting users, and generates feature quantities of the visiting users on the basis of the skeletal information of the visiting users. Further, when the feature quantities of a visiting user belong to the specific cluster, this processing unit detects the visiting user as a customer service target.

Specifically, when the detection unit 41 detects a person A from image data captured by a camera 1 in a sales floor A, the detection unit 41 executes determination of a customer service target while executing action detection by following up the person A for a time or number of frames determined in advance.

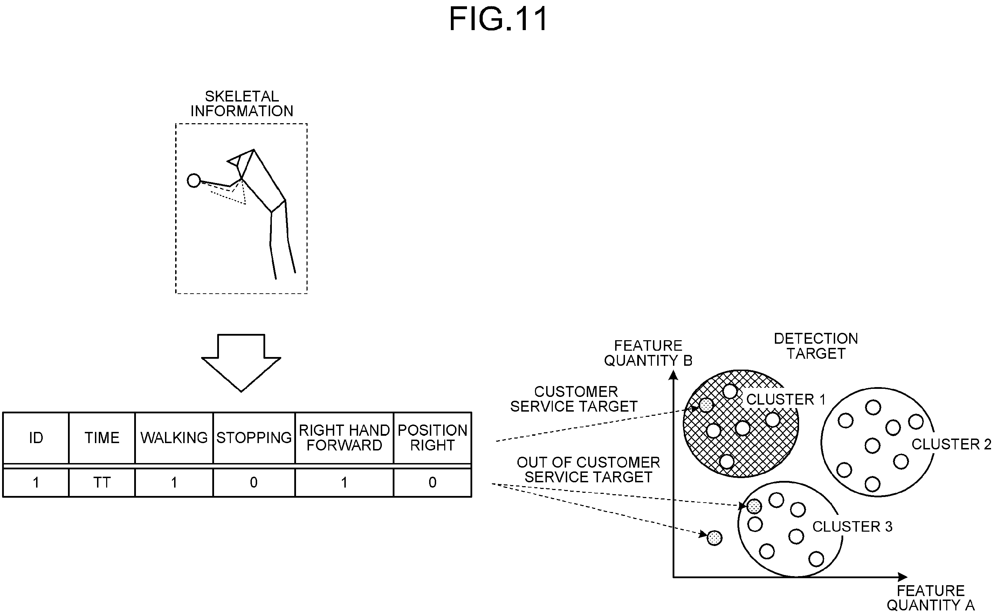

FIG. 11 is a diagram for explaining the customer service determination. As illustrated in FIG. 11, when the detection unit 41 detects a person A from certain image data (frames), the detection unit 41 uses the technical method of FIG. 7 to each piece of the image data (frames) in which the person A appears, and thereby obtains the skeletal information of the person A contained in the image data. Subsequently, the detection unit 41 refers to the action DB illustrated in FIG. 4 to recognize actions corresponding to the skeletal information A of this person thus obtained.

Here, it is assumed that the detection unit 41 detects the action of "WALKING" and the action of "RIGHT HAND FORWARD" in a few frames obtained within a time specified in advance. Then, the detection unit 41 generates "WALKING = 1, STOPPING = 0, RIGHT HAND FORWARD = 1, and POSITION RIGHT = 0" as the feature quantity data of the detection target, and performs mapping for these feature quantities in the form of vector data on the feature space of the determination index.

As a result of the mapping, when the feature quantity vector data of the detection target belongs to the cluster 1, the detection unit 41 determines that this indicates a customer highly effective in customer service, and detects the person A as a customer service target. After that, the detection unit 41 outputs, to the notification unit 42, the sales floor where the person A as the customer service target has been detected, the image data of the person A, the number of frames and the time used for the detection, and so forth.

On the other hand, when the feature quantity data of the detection target belong to a cluster other than the cluster 1, the detection unit 41 determines that this indicates a customer less effective in customer service, and detects the person A as being out of the customer service target.

The notification unit 42 is a processing unit that gives notice of information about a detected user to the person in charge of customer service, when the user is detected as the customer service target. As an explanation in the above example, the notification unit 42 receives, from the detection unit 41, the sales floor where the person A as the customer service target has been detected, the image data of the person A, the number of frames and the time used for the detection, and so forth. Then, the notification unit 42 transmits a message that identifies the sales floor with the customer service target to the clerk terminals 3 of clerks present near the sales floor A, a manager who manages the clerks integrally, etc.

### Process Flow

Here, an explanation will be given of the training processing performed by the preliminary processing unit 30 and the operational processing performed by the operation executing unit 40.

### Training Processing

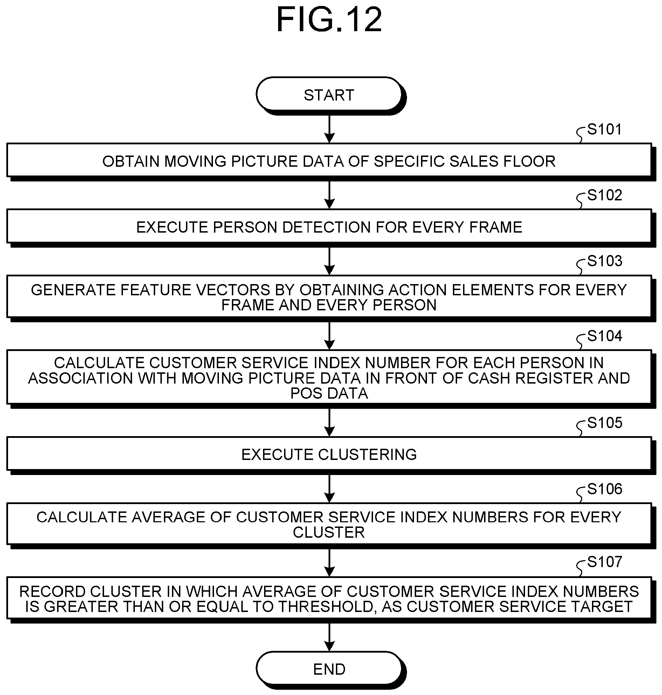

FIG. 12 is a flowchart illustrating the flow of the training processing according to the first embodiment. As illustrated in FIG. 12, the preliminary processing unit 30 obtains moving picture data of a specific sales floor (S101), and executes person detection for every frame of the moving picture data (S102).

Subsequently, the preliminary processing unit 30 generates feature vectors by obtaining the action elements illustrated in FIG. 4 for every frame and every person (S103). Further, the preliminary processing unit 30 calculates the customer service index number (product purchase) for each person in association with the moving picture data in front of the cash register and the POS data (S104).

After that, the preliminary processing unit 30 executes clustering by mapping each of the feature vectors on the feature space in which arbitrarily specified feature quantities are used as axes (S105). Then, the preliminary processing unit 30 calculates the average value of the customer service index numbers for every cluster (S106), and records a cluster in which the average value of the customer service index numbers is greater than or equal to a threshold, as a customer service target (S107).

### Operational Processing

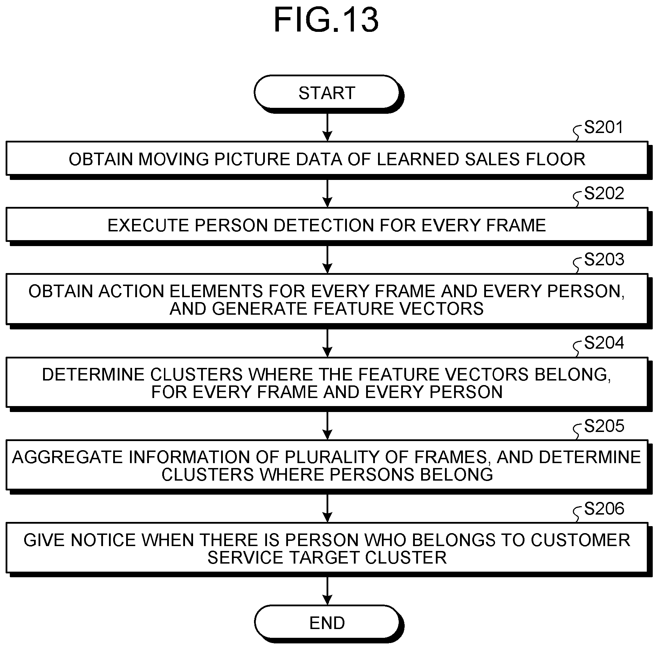

FIG. 13 is a flowchart illustrating the flow of the operational processing according to the first embodiment. As illustrated in FIG. 13, the operation executing unit 40 obtains moving picture data of the learned sales floor (S201), and executes person detection for every frame of the moving picture data (S202).

Subsequently, the operation executing unit 40 obtains the action elements illustrated in FIG. 4 for every frame and every person, and generates feature vectors (S203). The operation executing unit 40 performs mapping for the feature vectors of every frame and every person on the feature space, and determines clusters where the feature vectors belong (S204).

After that, the operation executing unit 40 aggregates the information of a plurality of frames, and determines clusters where persons belong (S205). When there is a person who belongs to the customer service target cluster, the operation executing unit 40 gives notice to the clerk terminals 3 (S206). For example, the operation executing unit 40 executes the feature vector generation and the cluster determination for each piece of image data obtained in each sales floor, and gives notice to the clerk terminals 3 at the timing when a person who belongs to the customer service target cluster is detected. Here, the operation executing unit 40 may execute the processing to a plurality of frames together, or may execute the processing to frames one by one.

### Effect

As described above, the information processing device 10 can detect a customer interested in a product, without applying the cost for object learning and ROI setting to each sales floor, and thus can determine a customer highly effective in customer service. As a result, the store side can expect the sales to increase as clerks provide a customer service to such customers.

Further, the information processing device 10 can generate a determination index that does not depend on the type or size of a product, by performing action recognition using skeletal information. Thus, it is possible to detect a customer highly effective in customer service with high accuracy, without creating a rule for each product.

### [b] Second Embodiment

Incidentally, in the first embodiment described above, an explanation has been given of an example of using a cluster to generate a determination index. However, this is not limiting, and a mechanical learning model may be used. Accordingly, in a second embodiment, an explanation will be given of an example of generating a mechanical learning model as a determination index. Here, for the mechanical learning model, various types of algorithm, related to a support vector machine, a neural network, etc., can be used,

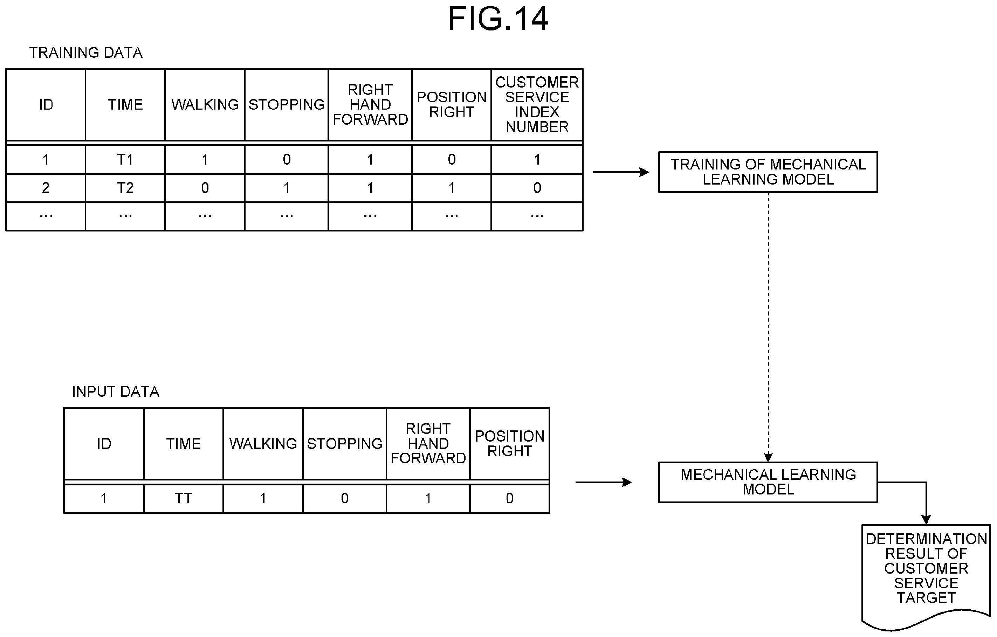

FIG. 14 is a diagram for explaining a specific example 1 that uses a mechanical learning model. As illustrated in FIG. 14, the preliminary processing unit 30 generates a mechanical learning model by mechanical learning that uses "WALKING, STOPPING, RIGHT HAND FORWARD, and POSITION RIGHT" in the training data as explanatory variables and "CUSTOMER SERVICE INDEX NUMBER" in the training data as an objective variable. That is, the preliminary processing unit 30 generates a mechanical learning model that determines whether the customer service index number is high or not in accordance with an input of the action recognition result. In other words, the preliminary processing unit 30 generates, from the skeletal information, a mechanical learning model that determines whether the customer is likely to purchase the product.

After that, the operation executing unit 40 uses the same technical method as that of the first embodiment, to input data, which indicates the feature quantities of a person detected in a certain sales floor, into the mechanical learning model, and to obtain a determination result about the customer service target from the output result of the mechanical learning model. Consequently, the operation executing unit 40 can execute the detection of a customer service target by use of the mechanical learning model. Further, the operation executing unit 40 can keep the determination index up to date by updating the mechanical learning model by re-training or the like of the mechanical learning model.

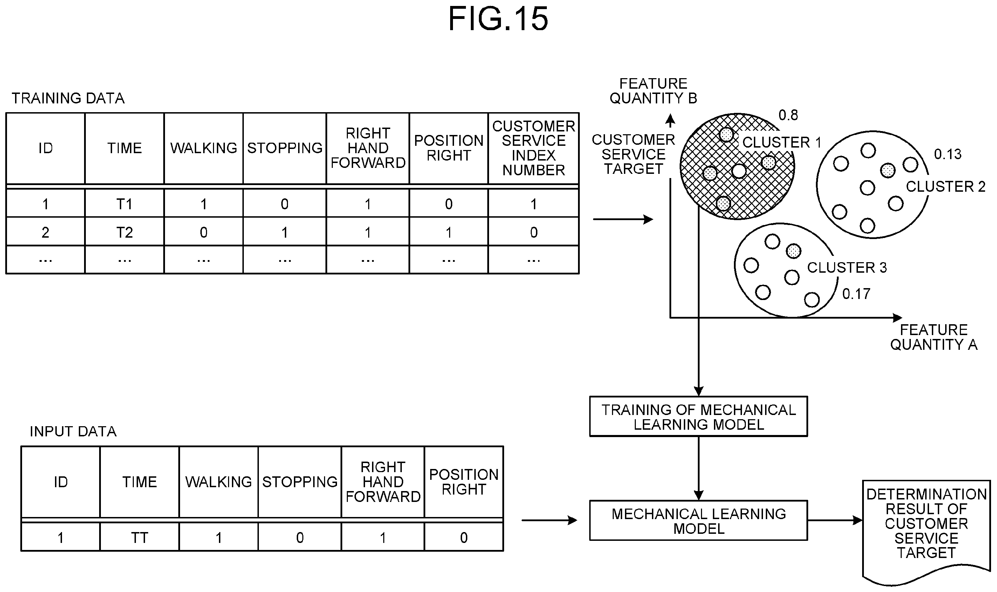

FIG. 15 is a diagram for explaining a specific example 2 that uses a mechanical learning model. As illustrated in FIG. 15, the preliminary processing unit 30 executes clustering for the training data by the same technical method as that of the first embodiment, and identifies a cluster high in customer service index number. After that, the preliminary processing unit 30 generates a mechanical learning model by use of the training data that belongs to the cluster high in customer service index number. For example, the preliminary processing unit 30 generates a mechanical learning model by mechanical learning that uses "WALKING, STOPPING, RIGHT HAND FORWARD, and POSITION RIGHT" in the training data as explanatory variables and "CUSTOMER SERVICE INDEX NUMBER" in the training data as an objective variable.

After that, the operation executing unit 40 uses the same technical method as that of the first embodiment, to input data, which indicates the feature quantities of a person detected in a certain sales floor, into the mechanical learning model, and to obtain a determination result about the customer service target from the output result of the mechanical learning model. Consequently, as compared even with the specific example 1, since the operation executing unit 40 generates a mechanical learning model after narrowing down the training data, it is possible to execute the detection processing with higher accuracy.

### [c] Third Embodiment

Incidentally, the embodiments of the present invention have been described so far, but the present invention may be implemented in various different forms other than the embodiments described above.

### Numerical Example

The data examples, the numerical examples, the number of clusters, the information in each DB, the number of frames, the correlation between actions and skeletal information, etc. used in the embodiments described above are mere examples and may be arbitrarily changed.

### Application Example

In the embodiments described above, an explanation has been given of an example in which image data obtained by the camera in front of the cash register is correlated with image data obtained in each sales floor. However, this is not limiting. For example, the information processing device 10 may add a time zone to the action elements, such that a cluster specific to a time zone with high sales is used as a cluster high in customer service index number. For example, as the customer service index number, the information processing device 10 may use, instead of the "presence or absence of product purchase", information that indicates whether the user's visit time is within a time zone with many product purchasers (for example, from 14:00 to 16:00).

Further, even when the presence or absence of product purchase is used, the information processing device 10 may use, in stead of the two values of purchase and non-purchase, three values or the like, such as "a person who did purchase after receiving a customer service = 1, a person who did purchase without receiving a customer service = 0.5, and a person who did not purchase = 0".

Further, in the application to a sales floor, the information processing device 10 may record the detected movement and the actual customer service effect, and give some feedback to the estimate of a customer service index number. For example, the information processing device 10 may update the customer service index number by the feedback result, and further update the evaluation index by re-clustering or re-training.

Further, the information processing device 10 may execute detection in consideration of time-series elements. For example, since a cluster containing the actions of one person changes over time, the information processing device 10 connects the order of changes with the customer service index number. Then, in the feedback of the customer service effect, the information processing device 10 gives some feedback concerning which timing in the cluster transition the customer service was performed. Consequently, it is possible to give notice of effective customer service timing.

### System

The processing sequences, the control sequences, the specific names, and the information including various data and parameters disclosed in the above description and the drawings may be arbitrarily changed unless otherwise specified.

Further, the specific forms of distribution and integration of the constituent elements of each device are not limited to those illustrated in the drawings. For example, the preliminary processing unit 30 and the operation executing unit 40 may be integrated. That is, all or some of the constituent elements may be functionally or physically distributed/integrated in any unit in accordance with various loads and/or use conditions. In addition, all or any part of each processing function of each device may be implemented by a CPU and a program that is analyzed and executed by the CPU, or may be implemented as hardware by wired logic.

### Hardware

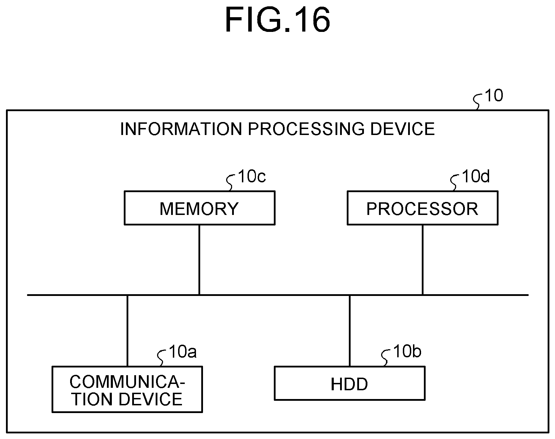

FIG. 16 is a diagram for explaining an example of a hardware configuration. As illustrated in FIG. 16, the information processing device 10 includes a communication device 10a, a Hard Disk Drive (HDD) 10b, a memory 10c, and a processor 10d. Further, these units illustrated in FIG. 16 are connected to each other by a bus or the like.

The communication device 10a is a network interface card or the like, and performs communication with other devices. The HDD 10b stores the programs and DBs for operating the functions illustrated in FIG. 2.

The processor 10d reads a program that executes the same processing as that of each processing unit illustrated in FIG. 2 from the HDD 10b or the like, and expands the program in the memory 10c to operate a process that executes each function explained with reference to FIG. 2 and so forth. For example, this process executes the same function as that of each processing unit included in the information processing device 10. Specifically, the processor 10d reads a program that includes the same functions as those of the preliminary processing unit 30, the operation executing unit 40, etc. from HDD 10b or the like. Then, the processor 10d executes a process that executes the same processing parts as those of the preliminary processing unit 30, the operation executing unit 40, etc.

As described above, the information processing device 10 operates as an information processing device that executes the detection method by reading and executing a program. Alternatively, the information processing device 10 may realize the same functions as those of each embodiment described above by reading the program from a recording medium by a medium reader and executing the program thus read. Note that, in another embodiment, the program may be executed without being limited to the manner of execution by the information processing device 10. For example, the embodiment described above may be applied as well when another computer or server executes the program or when these devices work together to execute the program.

This program may be distributed via a network, such as the internet. This program may be recorded in a computer-readable recording medium, such as a hard disk, flexible disc (FD), CD-ROM, Magneto-Optical disk (MO), or Digital Versatile Disc (DVD), and executed by being read from the recording medium by a computer.

According to the embodiments, it is possible to detect a customer highly effective in customer service.

## Claims

1. A customer service detection program that causes a computer (10) to execute a process comprising:
obtaining (30) skeletal information of each of users who acted on a product by inputting image data captured by cameras into a trained mechanical learning model to obtain skeletal coordinate information of each of the users;
first generating (30) a feature quantity on a basis of the skeletal information that identifies an action of each of the users corresponding to the skeletal information of each of the users;
second generating (30) a determination index for determining a user interested in a product, by using the feature quantity of each of the users; and
detecting (40) a customer service target from visiting users, by using the determination index, wherein
the first generating (30) includes
adding, to the feature quantity of each of the users, a customer service index number indicating a degree of interest of each of the users in a product,
the second generating (30) includes
performing clustering for each of the users, by using the feature quantity,
calculating an average value of customer service index numbers of respective users who belong to each of clusters generated by the clustering, and
generating, as the determination index, a specific cluster in which the average value of customer service index numbers is greater than or equal to a threshold, and
the detecting (40) includes
obtaining skeletal information of a visiting user by inputting image data of the visiting user captured by cameras into a trained mechanical learning model to obtain skeletal coordinate information of the visiting user,
generating a feature quantity of the visiting user, on a basis of the skeletal information of the visiting user, and
detecting the visiting user as a customer service target, when the feature quantity of the visiting user belongs to the specific cluster.

2. The customer service detection program according to claim 1, wherein
the second generating (30) includes
generating, as the determination index, a mechanical learning model by mechanical learning that uses, as input data, feature quantities of respective users who belong to the specific cluster, and uses, as correct answer information, customer service index numbers of these users, and
the detecting (40) includes
obtaining skeletal information of each of visiting users,
generating a feature quantity of each of the visiting users, on a basis of the skeletal information of each of the visiting users, and
inputting the feature quantity of each of the visiting users into the mechanical learning model, and detecting a customer service target from the visiting users, on a basis of an output result of the mechanical learning model.

3. The customer service detection program according to claim 1, wherein
the first generating (30) includes
adding, to the feature quantity of each of the users, a customer service index number indicating a degree of interest of each of the users in a product,
the second generating (30) includes
generating, as the determination index, a mechanical learning model by mechanical learning that uses, as input data, the feature quantity of each of the users, and uses, as correct answer information, the customer service index number of each of the users, and
the detecting (40) includes
obtaining skeletal information of each of visiting users,
generating a feature quantity of each of the visiting users, on a basis of the skeletal information of each of the visiting users, and
inputting the feature quantity of each of the visiting users into the mechanical learning model, and detecting a customer service target from the visiting users, on a basis of an output result of the mechanical learning model.

4. The customer service detection program according to any one of claims 1 to 3, wherein the detecting (40) includes
giving notice of information about a detected user to a person in charge of customer service, when a user of the customer service target is detected.

5. The customer service detection program according to any one of claims 1 to 4, wherein the customer service index number is information indicating whether a user purchased a product, or information indicating whether a user's visit time is within a time zone with many product purchasers.

6. A customer service detection method causing a computer (10) to execute a process comprising:
obtaining (30) skeletal information of each of users who acted on a product by inputting image data captured by cameras into a trained mechanical learning model to obtain skeletal coordinate information of each of the users;
generating (30) a feature quantity on a basis of the skeletal information that identifies an action of each of the users corresponding to the skeletal information of each of the users;
generating (30) a determination index for determining a user interested in a product, by using the feature quantity of each of the users; and
detecting (40) a customer service target from visiting users, by using the determination index, wherein
the generating (30) a feature quantity includes
adding, to the feature quantity of each of the users, a customer service index number indicating a degree of interest of each of the users in a product,
the generating (30) a determination index includes
performing clustering for each of the users, by using the feature quantity,
calculating an average value of customer service index numbers of respective users who belong to each of clusters generated by the clustering, and
generating, as the determination index, a specific cluster in which the average value of customer service index numbers is greater than or equal to a threshold, and
the detecting (40) includes
obtaining skeletal information of a visiting user by inputting image data of the visiting user captured by cameras into a trained mechanical learning model to obtain skeletal coordinate information of the visiting user,
generating a feature quantity of the visiting user, on a basis of the skeletal information of the visiting user, and
detecting the visiting user as a customer service target, when the feature quantity of the visiting user belongs to the specific cluster.

7. An information processing device comprising:
an obtaining unit (30) that obtains skeletal information of each of users who acted on a product by inputting image data captured by cameras into a trained mechanical learning model to obtain skeletal coordinate information of each of the users;
a first generating unit (30) that generates a feature quantity on a basis of the skeletal information that identifies an action of each of the users corresponding to the skeletal information of each of the users;
a second generating unit (30) that generates a determination index for determining a user interested in a product, by using the feature quantity of each of the users; and
a detecting unit (40) that detects a customer service target from visiting users, by using the determination index, wherein
the first generating unit (30) adds, to the feature quantity of each of the users, a customer service index number indicating a degree of interest of each of the users in a product,
the second generating unit (30) performs clustering for each of the users, by using the feature quantity, calculates an average value of customer service index numbers of respective users who belong to each of clusters generated by the clustering, and generates, as the determination index, a specific cluster in which the average value of customer service index numbers is greater than or equal to a threshold, and
the detecting unit (40) obtains skeletal information of a visiting user by inputting image data of the visiting user captured by cameras into a trained mechanical learning model to obtain skeletal coordinate information of the visiting user, generates a feature quantity of the visiting user, on a basis of the skeletal information of the visiting user, and detects the visiting user as a customer service target, when the feature quantity of the visiting user belongs to the specific cluster.

## Patentansprüche

1. Kundendiensterkennungsprogramm, das einen Computer (10) veranlasst, einen Prozess auszuführen, der Folgendes umfasst:
Erfassen (30) von Skelettinformationen jedes Benutzers, der auf ein Produkt eingewirkt hat, indem Bilddaten, die von Kameras erfasst wurden, in ein trainiertes maschinelles Lernmodell eingespeist werden, um Skelettkoordinateninformationen jedes Benutzers zu erhalten;
erstes Erzeugen (30) einer Merkmalsgröße auf der Grundlage der Skelettinformationen, die eine Aktion jedes Benutzers identifiziert, die den jeweiligen Skelettinformationen der Nutzer entspricht;
zweites Erzeugen (30) eines Bestimmungsindex zum Bestimmen eines an einem Produkt interessierten Benutzers unter Verwendung der Merkmalsgröße jedes Benutzers; und
Erkennen (40) eines Kundendienstziels unter den Besuchern unter Verwendung des Bestimmungsindex, wobei das erste Erzeugen (30) Folgendes einschließt:
Hinzufügen zu der Merkmalsgröße jedes Benutzers einer Kundendienstindexzahl, die einen einen Grad des Interesses jedes Nutzers an einem Produkt angibt,
das zweite Erzeugen (30) Folgendes einschließt:
Durchführen eines Clusterings für jeden der Benutzer unter Verwendung der Merkmalsgröße,
Berechnen eines Durchschnittswerts von Kundendienstindexzahlen der jeweiligen Benutzer, die zu jedem der durch das Clustering erzeugten Cluster gehören, und
Erzeugen eines spezifischen Clusters als Bestimmungsindex, in dem der Durchschnittswert der Kundendienstindexzahlen größer oder gleich einem Schwellenwert ist, und das Erkennen (40) einschließt:
Erfassen von Skelettinformationen eines besuchenden Benutzers, indem Bilddaten des besuchenden Benutzers, die von Kameras erfasst wurden, in ein trainiertes maschinelles Lernmodell eingespeist werden, um Skelettkoordinateninformationen des besuchenden Benutzers zu erhalten,
Erzeugen einer Merkmalsgröße des besuchenden Benutzers auf der Grundlage der Skelettinformationen des besuchenden Benutzers, und
Erkennen des besuchenden Benutzers als Kundendienstziel, wenn die Merkmalsgröße des besuchenden Benutzers zu dem spezifischen Cluster gehört.

2. Kundendiensterkennungsprogramm nach Anspruch 1, wobei
das zweite Erzeugen (30) Folgendes einschließt:
Erzeugen eines maschinellen Lernmodells als Bestimmungsindex durch maschinelles Lernen, das als Eingabedaten die Merkmalsgrößen der jeweiligen Benutzer verwendet, die zu dem spezifischen Cluster gehören, und als Korrekturantwortinformationen die Kundendienstindexzahlen dieser Benutzer verwendet, und
das Erkennen (40) Folgendes einschließt:
Erfassen von Skelettinformationen jedes besuchenden Benutzers, das Erzeugen einer Merkmalsgröße jedes besuchenden Benutzers auf der Grundlage der Skelettinformationen jedes besuchenden Benutzers, und
Eingeben der Merkmalsgröße jedes besuchenden Benutzers in das maschinelle Lernmodell und das Erkennen eines Kundendienstziels unter den besuchenden Benutzern auf der Grundlage eines Ausgaberesultats des maschinellen Lernmodells.

3. Kundendiensterkennungsprogramm nach Anspruch 1, wobei das erste Erzeugen (30) Folgendes einschließt:
Hinzufügen zu der Merkmalsgröße jedes Benutzers einer Kundendienstindexzahl, die einen Grad des Interesses jedes Benutzers an einem Produkt angibt,
das zweite Erzeugen (30) Folgendes einschließt:
Erzeugen eines maschinellen Lernmodells als Bestimmungsindex durch maschinelles Lernen, das als Eingabedaten die Merkmalsgröße jedes Benutzers verwendet und als Korrekturantwortinformationen die Kundendienstindexzahl jedes Benutzers verwendet, und
das Erkennen (40) Folgendes einschließt:
Erfassen von Skelettinformationen jedes besuchenden Benutzers, das Erzeugen einer Merkmalsgröße jedes besuchenden Benutzers auf der Grundlage der Skelettinformationen jedes besuchenden Benutzers, und
Eingeben der Merkmalsgröße jedes besuchenden Benutzers in das maschinelle Lernmodell, und Erkennen eines Kundendienstziels unter den besuchenden Benutzern auf der Grundlage eines Ausgaberesultats des maschinellen Lernmodells.

4. Kundendiensterkennungsprogramm nach einem der Ansprüche 1 bis 3, wobei das Erkennen (40) das Bekanntgeben von Informationen über einen erkannten Benutzer an eine für den Kundendienst zuständige Person einschließt, wenn ein Benutzer des Kundendienstziels erkannt wird.

5. Kundendiensterkennungsprogramm nach einem der Ansprüche 1 bis 4, wobei die Kundendienstindexzahl Informationen angibt, die anzeigen, ob ein Benutzer ein Produkt gekauft hat, oder Informationen, die anzeigen, ob die Besuchszeit eines Benutzers in eine Zeitspanne mit vielen Produktkäufern fällt.

6. Kundendiensterkennungsverfahren, das einen Computer (10) veranlasst, einen Prozess auszuführen, der Folgendes umfasst:
Erfassen (30) von Skelettinformationen jedes Benutzers, der auf ein Produkt eingewirkt hat, indem von Kameras erfasste Bilddaten in ein trainiertes maschinelles Lernmodell eingespeist werden, um Skelettkoordinateninformationen jedes Benutzers zu erhalten;
Erzeugen (30) einer Merkmalsgröße auf der Grundlage der Skelettinformationen, die eine Aktion jedes Benutzers identifiziert, die den jeweiligen Skelettinformationen der Benutzer entspricht;
Erzeugen (30) eines Bestimmungsindex zum Bestimmen eines an einem Produkt interessierten Benutzers unter Verwendung der Merkmalsgröße jedes Benutzers; und
Erkennen (40) eines Kundendienstziels unter den besuchenden Benutzern unter Verwendung des Bestimmungsindex, wobei
das Erzeugen (30) einer Merkmalsgröße das Hinzufügen zu der Merkmalsgröße jedes Benutzers einer Kundendienstindexzahl einschließt, die einen Grad des Interesses jedes Benutzers an einem Produkt angibt,
das Erzeugen (30) eines Bestimmungsindex das Durchführen eines Clusterings für jeden Benutzer unter Verwendung der Merkmalsgröße einschließt,
Berechnen eines Durchschnittswerts der Kundendienstindexzahlen der jeweiligen Benutzer, die zu jedem der durch das Clustering erzeugten Cluster gehören, und
Erzeugen eines spezifischen Clusters als Bestimmungsindex, in dem der Durchschnittswert der Kundendienstindexzahlen größer oder gleich einem Schwellenwert ist, und das Erkennen (40) einschließt:
Erfassen von Skelettinformationen eines besuchenden Benutzers, indem Bilddaten des besuchenden Benutzers, die von Kameras erfasst wurden, in ein trainiertes maschinelles Lernmodell eingespeist werden, um Skelettkoordinateninformationen des besuchenden Benutzers zu erhalten,
Erzeugen einer Merkmalsgröße des besuchenden Benutzers auf der Grundlage der Skelettinformationen des besuchenden Benutzers, und
Erkennen des besuchenden Benutzers als Kundendienstziel, wenn die Merkmalsgröße des besuchenden Benutzers zu dem spezifischen Cluster gehört.

7. Informationsverarbeitungsvorrichtung, umfassend:
eine Erfassungseinheit (30), die Skelettinformationen jedes Benutzers erfasst, der auf ein Produkt eingewirkt hat, indem von Kameras erfasste Bilddaten in ein trainiertes maschinelles Lernmodell eingespeist werden, um Skelettkoordinateninformationen jedes Benutzers zu erhalten;
eine erste Erzeugungseinheit (30), die auf der Grundlage der Skelettinformationen eine Merkmalsgröße erzeugt, die eine Aktion jedes Benutzers identifiziert, die den jeweiligen Skelettinformationen der Benutzer entspricht;
eine zweite Erzeugungseinheit (30), die unter Verwendung der Merkmalsgröße jedes Benutzers einen Bestimmungsindex zum Bestimmen eines an einem Produkt interessierten Benutzers erzeugt; und
eine Erkennungseinheit (40), die unter Verwendung des Bestimmungsindex ein Kundendienstziel unter den besuchenden Benutzern erkennt, wobei
die erste Erzeugungseinheit (30) zu der Merkmalsgröße jedes Benutzers eine Kundendienstindexzahl hinzufügt, die einen Grad des Interesses jedes Benutzers an einem Produkt angibt,
die zweite Erzeugungseinheit (30) unter Verwendung der Merkmalsgröße für jeden Benutzer ein Clustering durchführt, einen Durchschnittswert der Kundendienstindexzahlen der jeweiligen Benutzer berechnet, die zu jedem der durch das Clustering erzeugten Cluster gehören, und ein spezifisches Cluster erzeugt, in dem der Durchschnittswert der Kundendienstindexzahlen größer oder gleich einem Schwellenwert ist, in dem dieses spezifische Cluster als Bestimmungsindex dient, und
wobei die Erkennungseinheit (40) Skelettinformationen eines besuchenden Benutzers erfasst, indem Bilddaten des besuchenden Benutzers, die von Kameras erfasst wurden, in ein trainiertes maschinelles Lernmodell eingespeist werden, um Skelettkoordinateninformationen des besuchenden Benutzers zu erhalten, eine Merkmalsgröße des besuchenden Benutzers auf der Grundlage der Skelettinformationen des besuchenden Benutzers erzeugt und den besuchenden Benutzer als Kundendienstziel erkennt, wenn die Merkmalsgröße des besuchenden Benutzers zu dem spezifischen Cluster gehört.

## Revendications

1. Programme de détection de service client qui amène un ordinateur (10) à mettre en œuvre un processus comprenant :
l'obtention (30) d'informations de squelette de chacun des utilisateurs qui ont agi sur un produit en entrant des données d'image capturées par des caméras dans un modèle d'apprentissage automatique entraîné afin d'obtenir des informations de coordonnées de squelette de chacun des utilisateurs ;
la première génération (30) d'une quantité de caractéristiques sur la base des informations de squelette qui identifient une action de chacun des utilisateurs correspondant aux informations de squelette de chacun des utilisateurs ;
la seconde génération (30) d'un indice de détermination pour déterminer un utilisateur intéressé par un produit, en utilisant la quantité de caractéristiques de chacun des utilisateurs ; et
la détection (40) d'une cible de service client parmi des utilisateurs visiteurs, en utilisant l'indice de détermination, dans lequel
la première génération (30) inclut
l'ajout, à la quantité de caractéristiques de chacun des utilisateurs, d'un indice de service client indiquant un degré d'intérêt de chacun des utilisateurs pour un produit,
la seconde génération (30) inclut
la mise en œuvre d'un regroupement pour chacun des utilisateurs, en utilisant la quantité de caractéristiques,
le calcul d'une valeur moyenne de numéro d'indice de service client d'utilisateurs respectifs qui appartiennent à chacun des groupes générés par le regroupement, et
la génération, en tant qu'indice de détermination, d'un groupe spécifique dans lequel la valeur moyenne de numéro d'indice de service client est supérieure ou égale à un seuil, et la détection (40) inclut
l'obtention d'informations de squelette d'un utilisateur visiteur en entrant des données d'image de l'utilisateur visiteur capturées par des caméras dans un modèle d'apprentissage automatique entraîné afin d'obtenir des informations de coordonnées de squelette de l'utilisateur visiteur,
la génération d'une quantité de caractéristiques de l'utilisateur visiteur, sur la base des informations de squelette de l'utilisateur visiteur, et
la détection de l'utilisateur visiteur en tant que cible de service client, lorsque la quantité de caractéristiques de l'utilisateur visiteur appartient au groupe spécifique.

2. Programme de détection de service client selon la revendication 1, dans lequel la seconde génération (30) inclut
la génération, en tant qu'indice de détermination, d'un modèle d'apprentissage automatique par apprentissage automatique qui utilise, en tant que données d'entrée, des quantités de caractéristiques d'utilisateurs respectifs qui appartiennent au groupe spécifique, et utilise, en tant qu'informations de bonne réponse, des numéros d'indice de service client de ces utilisateurs, et
la détection (40) inclut
l'obtention d'informations de squelette de chacun des utilisateurs visiteurs, la génération d'une quantité de caractéristiques de chacun des utilisateurs visiteurs, sur la base des informations de squelette de chacun des utilisateurs visiteurs, et
l'entrée de la quantité caractéristique de chacun des utilisateurs visiteurs dans le modèle d'apprentissage automatique, et la détection d'une cible de service client parmi les utilisateurs visiteurs, sur la base d'un résultat de sortie du modèle d'apprentissage automatique.

3. Programme de détection de service client selon la revendication 1, dans lequel
la première génération (30) inclut
l'ajout, à la quantité de caractéristiques de chacun des utilisateurs, d'un numéro d'indice de service client indiquant un degré d'intérêt de chacun des utilisateurs pour un produit,
la seconde génération (30) inclut
la génération, en tant qu'indice de détermination, d'un modèle d'apprentissage automatique par apprentissage automatique qui utilise, en tant que données d'entrée, la quantité de caractéristiques de chacun des utilisateurs, et utilise, en tant qu'informations de bonne réponse, le numéro d'indice de service client de chacun des utilisateurs, et
la détection (40) inclut
l'obtention d'informations de squelette de chacun des utilisateurs visiteurs, la génération d'une quantité de caractéristiques de chacun des utilisateurs visiteurs, sur la base des informations de squelette de chacun des utilisateurs visiteurs, et
l'entrée de la quantité caractéristique de chacun des utilisateurs visiteurs dans le modèle d'apprentissage automatique, et la détection d'une cible de service client parmi les utilisateurs visiteurs, sur la base d'un résultat de sortie du modèle d'apprentissage automatique.

4. Programme de détection de service client selon l'une quelconque des revendications 1 à 3, dans lequel la détection (40) inclut la notification d'informations concernant un utilisateur détecté à une personne en charge du service client, lorsqu'un utilisateur constituant la cible de service client est détecté.

5. Programme de détection de service client selon l'une quelconque des revendications 1 à 4, dans lequel le numéro d'indice de service client est une information indiquant si un utilisateur a acheté un produit, ou une information indiquant si l'horaire de visite d'un utilisateur se situe dans une plage horaire présentant de nombreux acheteurs de produit.

6. Procédé de détection de service client amenant un ordinateur (10) à mettre en œuvre un processus comprenant :
l'obtention (30) d'informations de squelette de chacun d'utilisateurs qui ont agi sur un produit en entrant des données d'image capturées par des caméras dans un modèle d'apprentissage automatique entraîné afin d'obtenir des informations de coordonnées de squelette de chacun des utilisateurs ;
la génération (30) d'une quantité de caractéristiques sur la base des informations de squelette qui identifient une action de chacun des utilisateurs correspondant aux informations de squelette de chacun des utilisateurs ;
la génération (30) d'un indice de détermination pour déterminer un utilisateur intéressé par un produit, en utilisant la quantité de caractéristiques de chacun des utilisateurs ; et
la détection (40) d'une cible de service client parmi des utilisateurs visiteurs, en utilisant l'indice de détermination, dans lequel
la génération (30) d'une quantité caractéristique inclut l'ajout, à la quantité caractéristique de chacun des utilisateurs, d'un indice de service client indiquant un degré d'intérêt de chacun des utilisateurs pour un produit,
la génération (30) d'un indice de détermination inclut la mise en œuvre d'un regroupement pour chacun des utilisateurs, en utilisant la quantité de caractéristiques,
le calcul d'une valeur moyenne de numéro d'indice de service client d'utilisateurs respectifs qui appartiennent à chacun des groupes générés par le regroupement, et
la génération, en tant qu'indice de détermination, d'un groupe spécifique dans lequel la valeur moyenne de numéro d'indice de service client est supérieure ou égale à un seuil, et la détection (40) inclut
l'obtention d'informations de squelette d'un utilisateur visiteur en entrant des données d'image de l'utilisateur visiteur capturées par des caméras dans un modèle d'apprentissage automatique entraîné afin d'obtenir des informations de coordonnées de squelette de l'utilisateur visiteur,
la génération d'une quantité de caractéristiques de l'utilisateur visiteur, sur la base des informations de squelette de l'utilisateur visiteur, et
la détection de l'utilisateur visiteur en tant que cible de service client, lorsque la quantité de caractéristiques de l'utilisateur visiteur appartient au groupe spécifique.

7. Dispositif de traitement d'informations comprenant :
une unité d'obtention (30) qui obtient des informations de squelette de chacun des utilisateurs qui ont agi sur un produit en entrant des données d'image capturées par des caméras dans un modèle d'apprentissage automatique entraîné afin d'obtenir des informations de coordonnées de squelette de chacun des utilisateurs ;
une première unité de génération (30) qui génère une quantité de caractéristiques sur la base des informations de squelette qui identifient une action de chacun des utilisateurs correspondant aux informations de squelette de chacun des utilisateurs ;
une seconde unité de génération (30) qui génère un indice de détermination pour déterminer un utilisateur intéressé par un produit, en utilisant la quantité de caractéristiques de chacun des utilisateurs ; et
une unité de détection (40) qui détecte une cible de service client parmi des utilisateurs visiteurs, en utilisant l'indice de détermination, dans lequel
la première unité de génération (30) ajoute, à la quantité de caractéristiques de chacun des utilisateurs, un numéro d'indice de service client indiquant un degré d'intérêt de chacun des utilisateurs pour un produit,
la seconde unité de génération (30) met en œuvre un regroupement pour chacun des utilisateurs, en utilisant la quantité de caractéristiques, calcule une valeur moyenne de numéro d'indice de service client d'utilisateurs respectifs qui appartiennent à chacun des groupes générés par le regroupement, et génère, en tant qu'indice de détermination, un groupe spécifique dans lequel la valeur moyenne de numéro d'indice de service client est supérieure ou égale à un seuil, et
l'unité de détection (40) obtient des informations de squelette d'un utilisateur visiteur en entrant des données d'image de l'utilisateur visiteur capturées par des caméras dans un modèle d'apprentissage automatique entraîné afin d'obtenir des informations de coordonnées de squelette de l'utilisateur visiteur, génère une quantité de caractéristiques de l'utilisateur visiteur, sur la base des informations de squelette de l'utilisateur visiteur, et détecte l'utilisateur visiteur en tant que cible de service client, lorsque la quantité de caractéristiques de l'utilisateur visiteur appartient au groupe spécifique.
